# EUROPEAN PATENT SPECIFICATION

(11) **EP 4 067 217 B1**
(45) Date of publication and mention of the grant of the patent: **26.07.2023**
(21) Application number: 22163241.7
(22) Date of filing: 21.03.2022
(51) Int. Cl.: B62J 17/04

(54) **STRADDLED VEHICLE**
GRÄTSCHSITZFAHRZEUG
VÉHICULE À ENFOURCHER

(30) Priority: 31.03.2021 JP 2021059302
(43) Date of publication of application: 05.10.2022
(73) Proprietor: Yamaha Hatsudoki Kabushiki Kaisha, Iwata-shi, Shizuoka 438-8501 (JP)
(72) Inventor: Terao, Haruki, Shizuoka (JP)
(74) Representative: Grünecker Patent- und Rechtsanwälte PartG mbB

(56) References cited:
- CN-U- 210 063 232
- CN-U- 212 556 616
- CN-Y- 2 801 605
- GB-A- 236 991
- GB-A- 2 218 060
- US-A- 2 237 594
- US-A1- 2019 061 858

## Description

The present invention relates to a straddled vehicle according to the preamble of independent claim 1. Such a straddled vehicle can be taken from the prior art document GB 236 991 A. Another example of such vehicle is known from document US 2019/061858 A1.

A straddled vehicle is equipped with a windscreen and a windscreen adjuster. The windscreen adjuster can change a height position of the windscreen. For example, in the vehicle of JP 5063233, the windscreen adjuster includes left and right rails and left and right sliders. The left and right rails are attached to the vehicle body frame. The left and right rails extend in the vertical direction as seen in the vehicle front view, and are disposed parallel to each other. The left slider is slidable on the left rail. The right slider is slidable on the right rail. The windscreen is attached to the left and right sliders. The height position of the windscreen is changed by moving the left and right sliders along the left and right rails.

In the straddled vehicle described above, the movable range of the windscreen is defined by the length of the rail. Therefore, if the movable range of the windscreen is widened, the rail becomes long. In that case, the rail tends to interfere with the parts around the rail, and the degree of freedom in layout is reduced. An object of the present invention is provide a straddled vehicle that can improve a degree of freedom in layout of a windscreen adjuster while obtaining a large movable range of a windscreen. According to the present invention said object is solved by a straddled vehicle having the features of independent claim 1. Preferred embodiments are laid down in the dependent claims.

A straddled vehicle according to one aspect of the present teaching includes a vehicle body, a windscreen adjuster, and a windscreen. The windscreen adjuster is attached to the vehicle body. The windscreen is attached to the vehicle body via the windscreen adjuster. The windscreen adjuster is configured to change a height position of the windscreen. The windscreen adjuster includes a right body rail, a left body rail, a right screen rail, a left screen rail, a right slider, and a left slider.

The right body rail is attached to the vehicle body. The left body rail is attached to the vehicle body. The right screen rail is attached to the windscreen. The left screen rail is attached to the windscreen. The right slider is disposed between the right body rail and the right screen rail. The right slider is slidable on the right body rail and the right screen rail. The left slider is disposed between the left body rail and the left screen rail. The left slider is slidable on the left body rail and the left screen rail.

The right body rail and the left body rail are inclined so that a distance between an upper end of the right body rail and an upper end of the left body rail in a vehicle width direction is different from a distance between a lower end of the right body rail and a lower end of the left body rail in the vehicle width direction as seen in a vehicle front view. The right screen rail and the left screen rail are inclined so that a distance between an upper end of the right screen rail and an upper end of the left screen rail in the vehicle width direction is different from a distance between a lower end of the right screen rail and a lower end of the left screen rail in the vehicle width direction as seen in the vehicle front view. The right screen rail and the left screen rail are inclined in a direction opposite to the right body rail and the left body rail as seen in the vehicle front view.

In the straddled vehicle according to the present teaching, the right slider moves along the right body rail and the left slider moves along the left body rail to move the windscreen and the left and right screen rails. Further, the right slider moves along the right screen rail and the left slider moves along the left screen rail to move the windscreen. Therefore, the length of the rails for moving the windscreen is divided into the body rails and the screen rails, so that the length of the body rails is shortened. As a result, a degree of freedom in layout of the body rails is improved while obtaining a large movable range of the windscreen.

The right body rail and the left body rail may be inclined so that the distance between the upper end of the right body rail and the upper end of the left body rail in the vehicle width direction is larger than the distance between the lower end of the right body rail and the lower end of the left body rail in the vehicle width direction as seen in the vehicle front view. The right screen rail and the left screen rail may be inclined so that the distance between the upper end of the right screen rail and the upper end of the left screen rail in the vehicle width direction is smaller than the distance between the lower end of the right screen rail and the lower end of the left screen rail in the vehicle width direction as seen in the vehicle front view. In this case, when the windscreen is moved upward, the distance between the left and right sliders increases. As a result, a support rigidity of the windscreen by the windscreen adjuster is improved.

The right body rail and the left body rail may be inclined so that the distance between the upper end of the right body rail and the upper end of the left body rail in the vehicle width direction is smaller than the distance between the lower end of the right body rail and the lower end of the left body rail in the vehicle width direction as seen in the vehicle front view. The right screen rail and the left screen rail may be inclined so that the distance between the upper end of the right screen rail and the upper end of the left screen rail in the vehicle width direction is larger than the distance between the lower end of the right screen rail and the lower end of the left screen rail in the vehicle width direction as seen in the vehicle front view. In this case, the upper ends of the left and right body rails are compactly disposed.

The right screen rail and the left screen rail may be disposed on a same plane as the right body rail and the left body rail. In this case, the windscreen adjuster is miniaturized.

The right screen rail may be disposed so as to overlap the right body rail. The left screen rail may be disposed so as to overlap the left body rail. In this case, the windscreen adjuster is miniaturized.

The right screen rail may intersect the right body rail in the right slider. The left screen rail may intersect the left body rail in the left slider. In this case, the windscreen adjuster is miniaturized.

The straddled vehicle may further include a right diffuser and a left diffuser. The right diffuser may be attached to the right slider. The left diffuser may be attached to the left slider. In this case, the right and left diffusers can be moved in conjunction with the left and right sliders without using an additional power source.

The windscreen adjuster may be configured to change a height position of the windscreen between a low position and a high position. When the windscreen is located at the low position, the right slider may be located at the lower end of the right body rail and at the upper end of the right screen rail. When the windscreen is located at the low position, the left slider may be located at the lower end of the left body rail and at the upper end of the left screen rail. In this case, the left and right body rails and the left and right screen rails are compactly disposed when the windscreen is located at the low position.

When the windscreen is located at the high position, the right slider may be located at the upper end of the right body rail and at the lower end of the right screen rail. When the windscreen is located at the high position, the left slider may be located at the upper end of the left body rail and at the lower end of the left screen rail. In this case, the windscreen moves upward by a distance corresponding to the length of the left and right body rails and the left and right screen rails in a moving direction of the windscreen. Therefore the windscreen moves more than parallel rails of the same length.

### BRIEF DESCRIPTION OF DRAWINGS

FIG. 1 is a side view of a straddled vehicle according to an embodiment.
FIG. 2 is a front view of a part of the straddled vehicle.
FIG. 3 is a front view of a part of the straddled vehicle.
FIG. 4 is a perspective view of a windscreen adjuster.
FIG. 5 is a perspective view of the windscreen adjuster.
FIG. 6 is an enlarged view of a right slider.
FIG. 7 is an enlarged cross-sectional view of the right slider.
FIG. 8A is a diagram showing an operation of the windscreen adjuster when the windscreen moves.
FIG. 8B is a diagram showing the operation of the windscreen adjuster when the windscreen moves.
FIG. 8C is a diagram showing the operation of the windscreen adjuster when the windscreen moves.
FIG. 9 is a front view of a part of the straddled vehicle according to a first modification.
FIG. 10 is a front view of a part of the straddled vehicle according to the first modification.
FIG. 11 is a perspective view of a part of the straddled vehicle according to a second modification.
FIG. 12A is a diagram showing the windscreen adjuster of the straddled vehicle according to a third modification.
FIG. 12B is a diagram showing the windscreen adjuster of the straddled vehicle according to the third modification.
FIG. 12C is a diagram showing the windscreen adjuster of the straddled vehicle according to the third modification.

### DESCRIPTION OF EMBODIMENTS

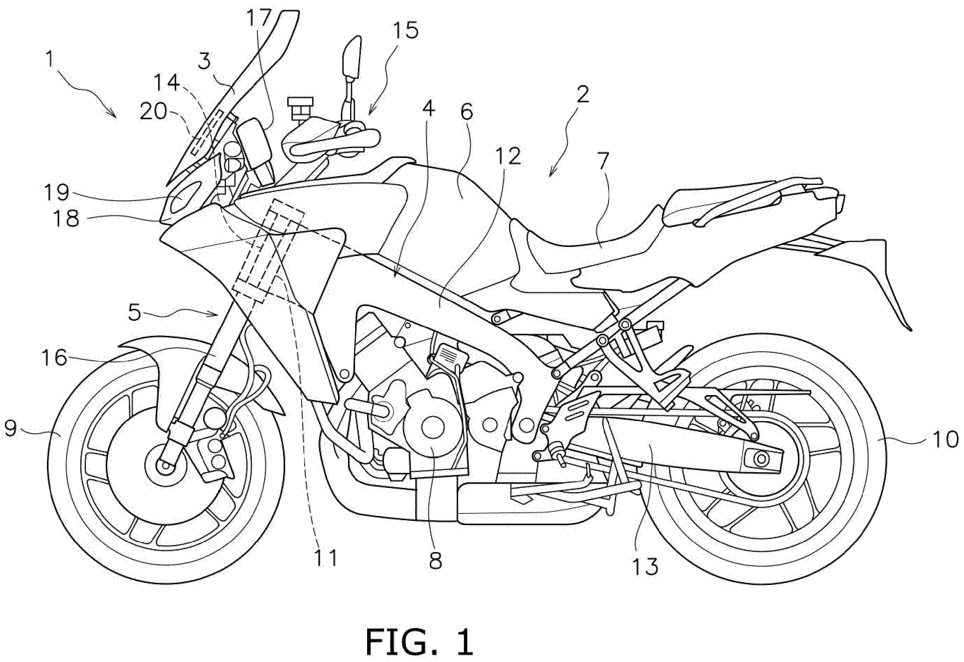

Hereinafter, a straddled vehicle according to an embodiment will be described with reference to the drawings. FIG. 1 is a side view of the straddled vehicle 1 according to the embodiment. As shown in FIG. 1, the straddled vehicle 1 includes a vehicle body 2 and a windscreen 3. The vehicle body 2 includes a vehicle body frame 4, a steering device 5, a fuel tank 6, a seat 7, a power unit 8, a front wheel 9, and a rear wheel 10.

The vehicle body frame 4 includes a head pipe 11 and a main frame 12. The main frame 12 is connected to the head pipe 11. The main frame 12 extends rearward from the head pipe 11. In the present embodiment, the front-back, left-right, and up-down directions mean the front-back, left-right, and up-down directions as seen from a rider seated on the seat 7.

The steering device 5 is rotatably supported by the head pipe 11. The steering device 5 rotatably supports the front wheel 9. The steering device 5 includes a steering shaft 14, a handle member 15, and a front fork 16. The steering shaft 14 is inserted into the head pipe 11. The handle member 15 is disposed above the head pipe 11. The handle member 15 extends in the left-right direction. A meter unit 17 is disposed in front of the handle member 15. The meter unit 17 includes, for example, a speedometer. The front fork 16 is connected to the steering shaft 14. The front fork 16 rotatably supports the front wheel 9.

The fuel tank 6 is disposed behind the head pipe 11. The fuel tank 6 is supported by the main frame 12. The seat 7 is disposed behind the fuel tank 6. The power unit 8 is disposed below the fuel tank 6. The power unit 8 is supported by the main frame 12. The power unit 8 includes, for example, an internal combustion engine. The rear wheel 10 is supported by the main frame 12 via a swing arm 13. The rear wheel 10 is rotatably supported by the swing arm 13. The swing arm 13 is swingably supported by the main frame 12.

The straddled vehicle 1 includes a front cover 18. The front cover 18 is disposed in front of the head pipe 11. A lamp 19 such as a headlight or a position light is disposed on the front cover 18. The windscreen 3 is disposed above the front cover 18. The windscreen 3 is made of a transparent material such as resin.

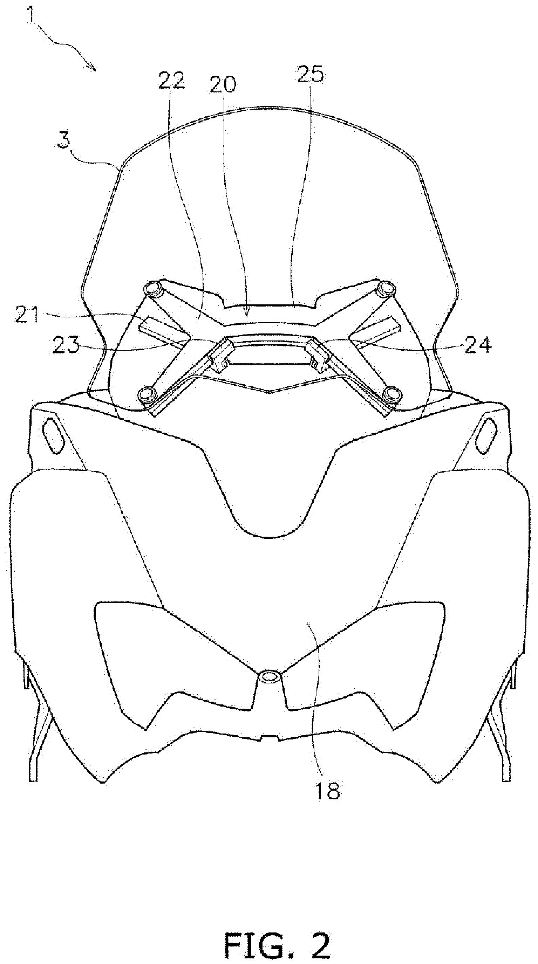

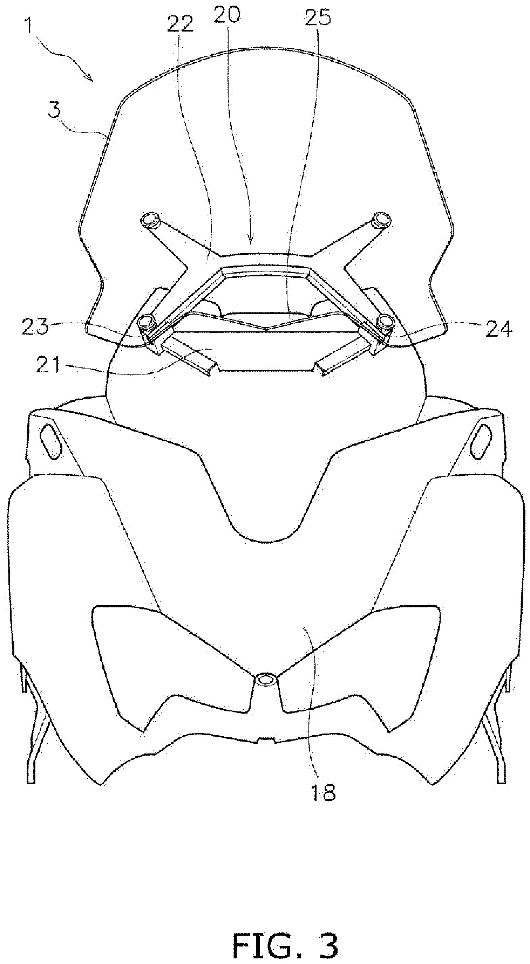

FIGs. 2 and 3 are front views of a part of the straddled vehicle 1. As shown in FIGS. 2 and 3, the straddled vehicle 1 includes a windscreen adjuster 20. The windscreen adjuster 20 is attached to the vehicle body 2. The windscreen 3 is attached to the vehicle body 2 via the windscreen adjuster 20. The windscreen adjuster 20 and the windscreen 3 are disposed in front of the meter unit 17. The windscreen adjuster 20 is disposed between the meter unit 17 and the windscreen 3.

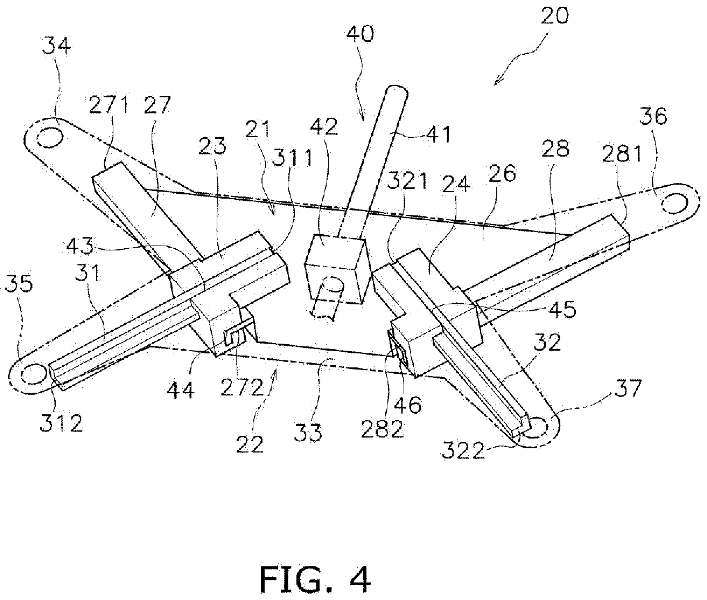

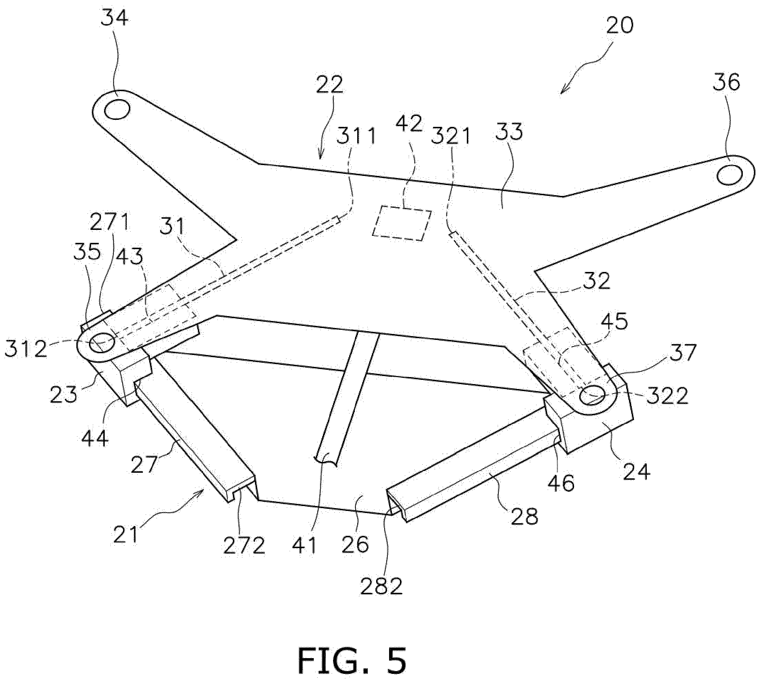

The windscreen adjuster 20 is configured to change a height position of the windscreen 3 between a low position and a high position. FIG. 2 shows the windscreen 3 at the low position. FIG. 3 shows the windscreen 3 at the high position. FIGS. 4 and 5 are perspective views of the windscreen adjuster 20. FIG. 4 shows the windscreen adjuster 20 when the windscreen 3 is located at the low position. FIG. 5 shows the windscreen adjuster 20 when the windscreen 3 is located at the high position.

The windscreen adjuster 20 includes a vehicle body stay 21, a screen stay 22, a right slider 23, and a left slider 24. The vehicle body stay 21 is attached to the vehicle body. The vehicle body stay 21 is attached to a front surface 25 of the meter unit 17. The vehicle body stay 21 includes a connecting portion 26, a right body rail 27, and a left body rail 28. The connecting portion 26 is disposed between the right body rail 27 and the left body rail 28. The connecting portion 26 connects the right body rail 27 and the left body rail 28.

The right body rail 27 and the left body rail 28 are disposed so as to be inclined with respect to the vehicle vertical direction and the vehicle width direction. The right body rail 27 and the left body rail 28 are disposed symmetrically. The right body rail 27 and the left body rail 28 is inclined so that a distance between an upper end 271 of the right body rail 27 and an upper end 281 of the left body rail 28 in the vehicle width direction is larger than a distance between a lower end 272 of the right body rail 27 and a lower end 282 of the left body rail 28 in the vehicle width direction as seen in the vehicle front view.

The right body rail 27 extends diagonally upward and rightward as seen in the vehicle front view. The left body rail 28 extends upward and leftward as seen in the vehicle front view. The right body rail 27 and the left body rail 28 are disposed in a V shape as seen in the vehicle front view.

The screen stay 22 is attached to the windscreen 3. The screen stay 22 includes a right screen rail 31, a left screen rail 32, and a stay body 33. The right screen rail 31 and the left screen rail 32 are disposed so as to be inclined with respect to the vehicle vertical direction and the vehicle width direction. The right screen rail 31 and the left screen rail 32 are disposed symmetrically. The right screen rail 31 and the left screen rail 32 are disposed so as to be inclined in an opposite direction to the right body rail 27 and the left body rail 28 as seen in the vehicle front view.

Specifically, the right screen rail 31 and the left screen rail 32 are inclined so that a distance between an upper end 311 of the right screen rail 31 and an upper end 321 of the left screen rail 32 in the vehicle width direction is smaller than a distance between a lower end 312 of the right screen rail 32 and a lower end 322 of the left screen rail 32 in the vehicle width direction as seen in the vehicle front view.

The right screen rail 31 extends diagonally upward and leftward as seen in the vehicle front view. The left screen rail 32 extends diagonally upward and rightward as seen in the vehicle front view. The right screen rail 31 and the left screen rail 32 are disposed in an inverted V shape as seen in the vehicle front view. The right screen rail 31 and the left screen rail 32 are disposed on the same plane as the right body rail 27 and the left body rail 28.

The stay body 33 is connected to the right screen rail 31 and the left screen rail 32. In FIG. 4, the stay body 33 is shown by a two-dot chain line, and a structure which is disposed below the stay body 33 is shown through the stay body 33. The stay body 33 includes a plurality of mounting portions 34 to 37. The stay body 33 is attached to the windscreen 3 at the plurality of mounting portions 34 to 37. The plurality of mounting portions 34 to 37 are mounted on the windscreen 3 by fixing members such as bolts.

A drive mechanism 40 is connected to the stay body 33. The drive mechanism 40 moves the screen stay 22 up and down with respect to the vehicle body stay 21. The drive mechanism 40 is, for example, a ball screw and includes a screw shaft 41 and a nut 42. The nut 42 is connected to the stay body 33. The screw shaft 41 is screwed into the nut 42. The screw shaft 41 is rotationally driven by an actuator such as an electric motor, so that the screen stay 22 moves up and down with respect to the vehicle body stay 21.

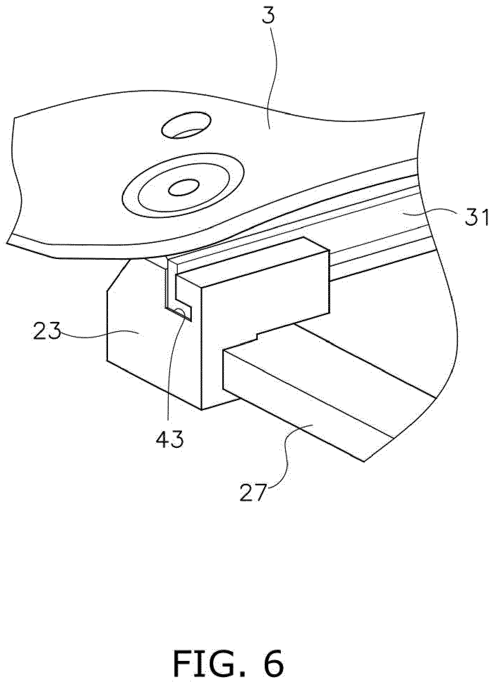

The right slider 23 is disposed between the right body rail 27 and the right screen rail 31. The right slider 23 is slidable on the right body rail 27 and the right screen rail 31. FIG. 6 is an enlarged view of the right slider 23. As shown in FIG. 6, the right slider 23 includes a first right groove 43. The first right groove 43 extends in the same direction as the right screen rail 31. The right screen rail 31 is engaged with the first right groove 43.

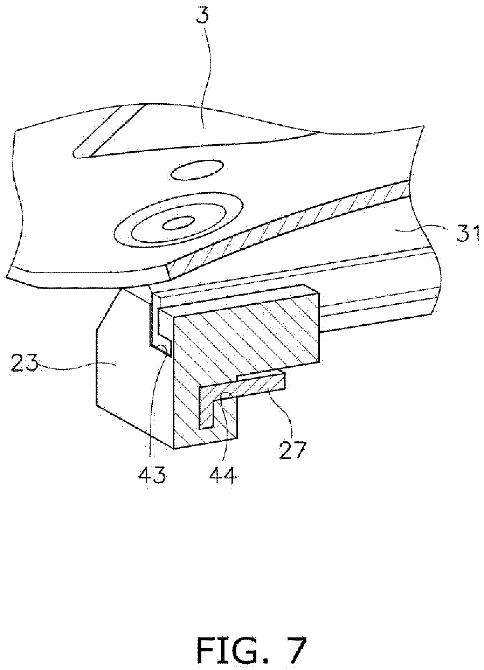

FIG. 7 is an enlarged cross-sectional view of the right slider 23. As shown in FIG. 7, the right slider 23 includes a second right groove 44. The second right groove 44 extends in the same direction as the right body rail 27. The right body rail 27 is engaged with the second right groove 44. The right screen rail 31 intersects the right body rail 27 in the right slider 23, and is disposed so as to overlap the right body rail 27.

The left slider 24 is disposed symmetrically with the right slider 23. The left slider 24 is disposed between the left body rail 28 and the left screen rail 32. The left slider 24 is slidable on the left body rail 28 and the left screen rail 32. The left slider 24 has the same structure as the right slider 23.

As shown in FIG. 4, the left slider 24 includes a first left groove 45. The first left groove 45 extends in the same direction as the left screen rail 32. The left screen rail 32 is engaged with the first left groove 45. The left slider 24 includes a second left groove 46. The second left groove 46 extends in the same direction as the left body rail 28. The left body rail 28 is engaged with the second left groove 46. The left screen rail 32 intersects the left body rail 28 in the left slider 24, and is disposed so as to overlap the left body rail 28.

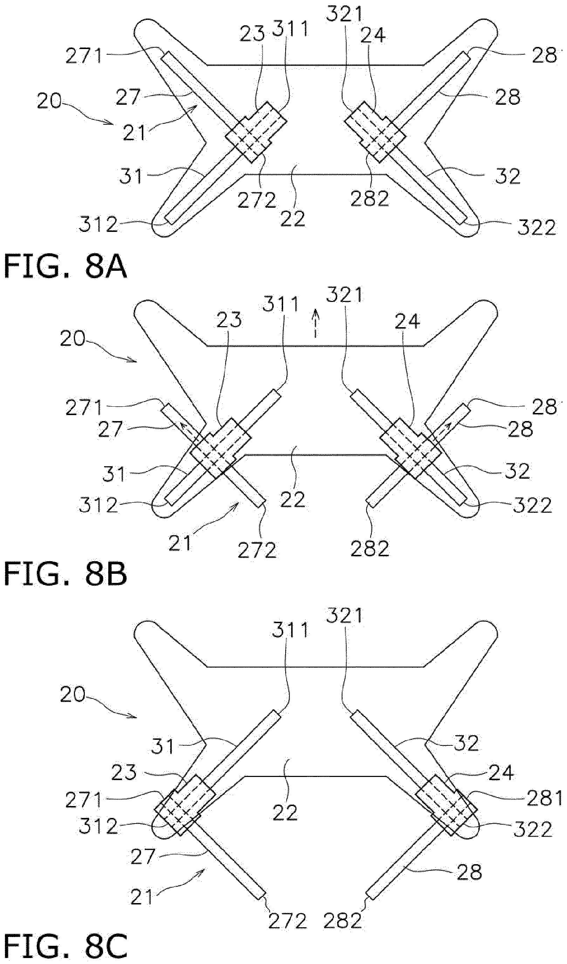

FIGS. 8A to 8C are diagrams showing the operation of the windscreen adjuster 20 when the windscreen 3 moves. FIG. 8A shows the windscreen adjuster 20 when the windscreen 3 is located at the low position. FIG. 8B shows the windscreen adjuster 20 when the windscreen 3 is located between the low position and the high position. FIG. 8C shows the windscreen adjuster 20 when the windscreen 3 is located at the high position.

As shown in FIG. 8A, when the windscreen 3 is located at the low position, the right slider 23 is located at the lower end 272 of the right body rail 27, and is located at the upper end 311 of the right screen rail 31. Further, when the windscreen 3 is located at the low position, the left slider 24 is located at the lower end 282 of the left body rail 28 and at the upper end 321 of the left screen rail 32.

When the windscreen 3 moves from the low position to the high position, the screen stay 22 moves upward together with the windscreen 3 as shown in FIG. 8B. At this time, the right slider 23 moves upward and rightward along the right body rail 27, and slides along the right screen rail 31. Further, the left slider 24 moves upward and leftward along the left body rail 28, and slides along the left screen rail 32. That is, the left and right sliders 23 and 24 move upward and outward in the vehicle width direction.

As shown in FIG. 8C, when the windscreen 3 reaches the high position, the right slider 23 reaches the upper end 271 of the right body rail 27 and reaches the lower end 312 of the right screen rail 31. Further, the left slider 24 reaches the upper end 281 of the left body rail 28 and reaches the lower end 322 of the left screen rail 32.

When the windscreen 3 moves from the high position to the low position, the screen stay 22, the vehicle body stay 21, and the left and right sliders 23 and 24 move in the opposite directions to the above. That is, the right slider 23 moves downward and leftward along the right body rail 27, and slides along the right screen rail 31. Further, the left slider 24 moves downward and rightward along the left body rail 28, and slides along the left screen rail 32. That is, the left and right sliders 23 and 24 move downward and inward in the vehicle width direction.

In the straddled vehicle 1 according to the present embodiment described above, the right slider 23 moves along the right body rail 27, and the left slider 24 moves along the left body rail 28, whereby the windscreen 3 and the left and right screen rails 31 and 32 move. Further, the right slider 23 moves along the right screen rail 31, and the left slider 24 moves along the left screen rail 32, whereby the windscreen 3 moves. Therefore, the length of the rails for moving the windscreen 3 is divided into the body rails 27 and 28 and the screen rails 31 and 32, so that the lengths of the body rails 27 and 28 can be shortened. As a result, the degree of freedom in the layout of the body rails 27 and 28 is improved while obtaining a large movable range of the windscreen 3.

The straddled vehicle 1 according to the above embodiment is a so-called street motorcycle. However, the straddled vehicle of the present teaching is not limited to the street motorcycle, and may be an off-road motorcycle. Alternatively, the straddled vehicle may be a scooter, underbone, or moped.

The configuration of the straddled vehicle is not limited to that of the above embodiment, and may be changed. For example, the shape of the vehicle body frame 4 is not limited to that of the above embodiment, and may be changed. The power unit 8 is not limited to the internal combustion engine, and may include an electric motor. The number of the front wheel 9 is not limited to one, and may be two or more. The number of the rear wheel 10 is not limited to one, and may be two or more.

The structure of the windscreen adjuster 20 is not limited to that of the above embodiment, and may be changed. For example, the connecting portion 26 of the vehicle body stay 21 may be omitted. The structure of the drive mechanism 40 is not limited to that of the above embodiment, and may be changed. The drive mechanism 40 may be omitted. That is, the windscreen 3 may be moved manually.

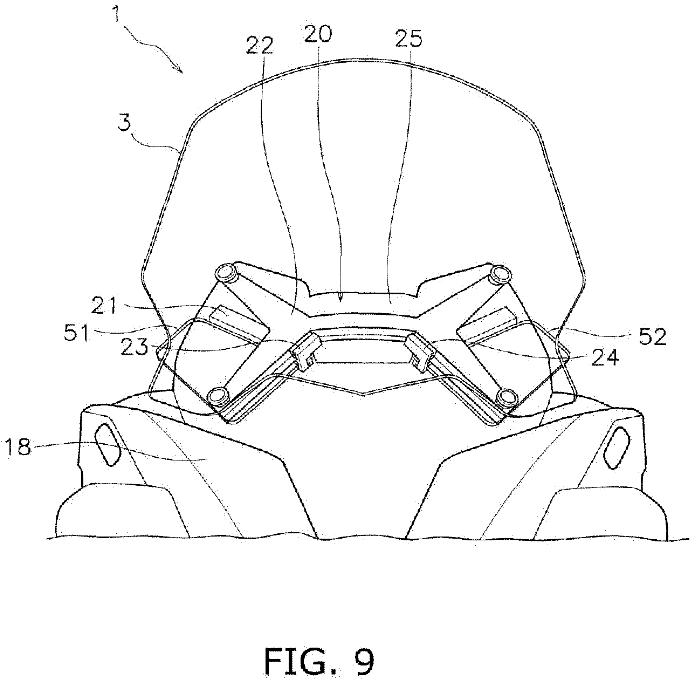

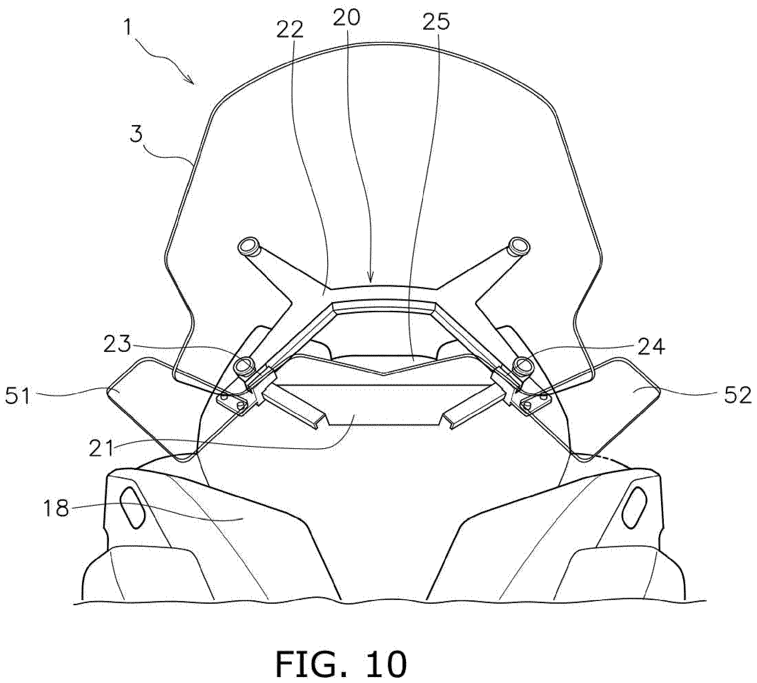

FIGS. 9 and 10 are front views of a part of the straddled vehicle according to a first modification. FIG. 9 shows the windscreen adjuster 20 when the windscreen 3 is located at the low position. FIG. 10 shows the windscreen adjuster 20 when the windscreen 3 is located at the high position. As shown in FIGS. 9 and 10, the straddled vehicle may include a right diffuser 51 and a left diffuser 52. The right diffuser 51 is attached to the right slider 23. The left diffuser 52 is attached to the left slider 24. The right diffuser 51 and the left diffuser 52 are made of a transparent material such as resin. However, the right diffuser 51 and the left diffuser 52 may be made of an opaque material.

When the windscreen 3 is located at the low position, the right diffuser 51 and the left diffuser 52 are disposed at a folded position shown in FIG. 9. The right diffuser 51 and the left diffuser 52 are stored behind the windscreen 3 at the folded position. When the windscreen 3 is located at the high position, the right diffuser 51 and the left diffuser 52 are disposed at an unfolded position shown in FIG. 10. The right diffuser 51 and the left diffuser 52 are disposed so as to project from the windscreen 3 in the vehicle width direction at the unfolded position. The right diffuser 51 and the left diffuser 52 are disposed at the unfolded position so as to be wider in the vehicle width direction than the folded position. Other configurations of the straddled vehicle according to the first modification are the same as those of the straddled vehicle 1 according to the above-described embodiment.

In the straddled vehicle according to the first modification, as the windscreen 3 moves from the low position to the high position, the left and right sliders 23 and 24 move outward in the vehicle width direction, respectively. As a result, the right and left diffusers 51 and 52 move outward in the vehicle width direction together with the sliders 23 and 24, and thereby move from the folded position to the unfolded position. Further, as the windscreen 3 moves from the high position to the low position, the left and right sliders 23 and 24 move inward in the vehicle width direction, respectively. As a result, the right and left diffusers 51 and 52 move inward in the vehicle width direction together with the sliders 23 and 24, and thereby move from the unfolded position to the folded position. As described above, in the straddled vehicle according to the first modification, the right and left diffusers 51 and 52 can be moved in conjunction with the left and right sliders 23 and 24 without using an additional power source.

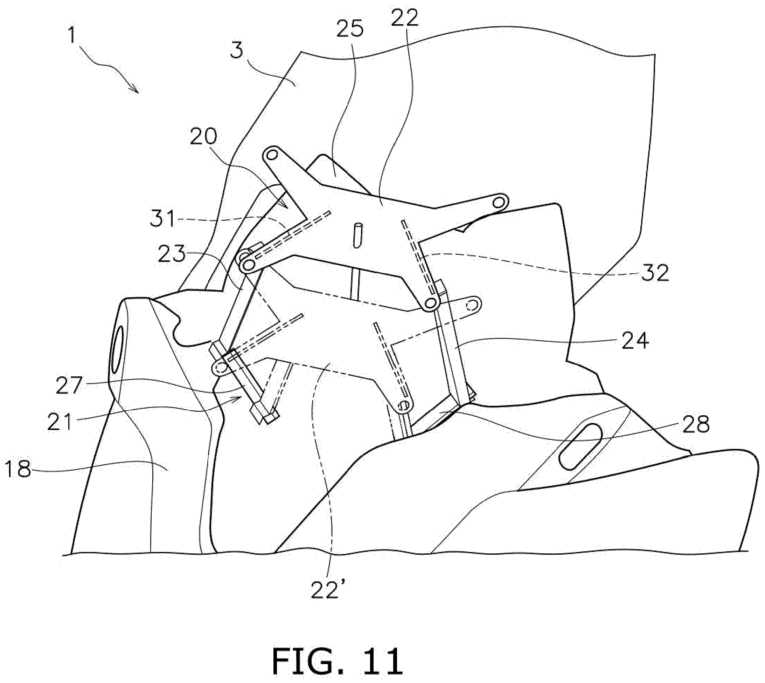

FIG. 11 is a perspective view of a part of the straddled vehicle according to a second modification. As shown in FIG. 11, the right screen rail 31 and the left screen rail 32 do not have to be disposed on the same plane as the right body rail 27 and the left body rail 28. In the straddled vehicle according to the second modification, the right screen rail 31 and the left screen rail 32 are disposed above the right body rail 27 and the left body rail 28.

In FIG. 11, the screen stay 22' when the windscreen 3 is located at the low position is shown by a chain double-dashed line. Further, the screen stay 22 when the windscreen 3 is located at the high position is shown by a solid line. As shown in FIG. 11, in the straddled vehicle according to the second modification, the right slider 23 extends upward from the right body rail 27 toward the right screen rail 31. The left slider 24 extends upward from the left body rail 28 toward the left screen rail 32. Other configurations of the straddled vehicle according to the second modification are the same as those of the straddled vehicle 1 according to the above-described embodiment.

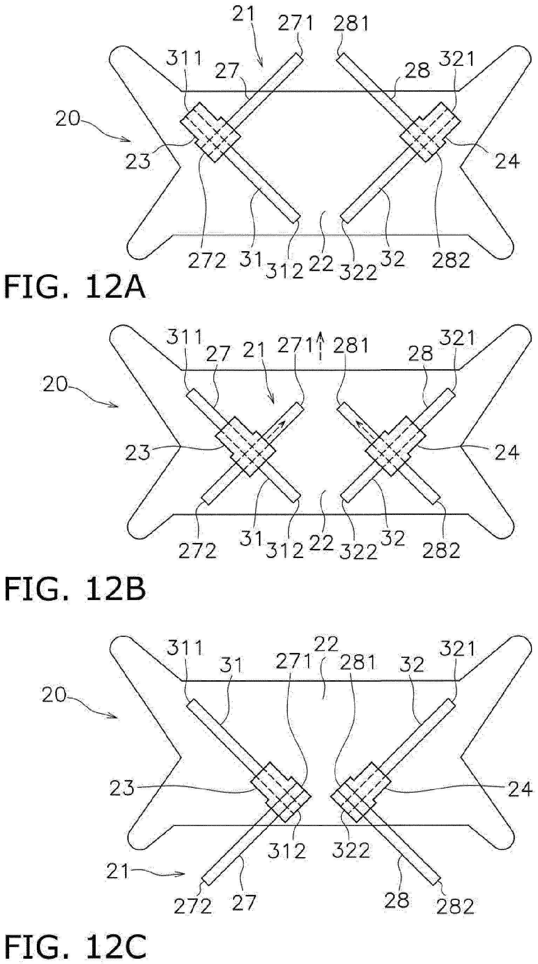

The inclination directions of the right screen rail 31 and the left screen rail 32 are not limited to those of the above embodiment, and may be changed. The inclination directions of the right body rail 27 and the left body rail 28 are not limited to those of the above embodiment, and may be changed. For example, FIGS. 12A to 12C are views showing the windscreen adjuster 20 of the straddled vehicle 1 according to a third modification.

As shown in FIG. 12A, the right body rail 27 and the left body rail 28 may be inclined so that the distance between the upper end 271 of the right body rail 27 and the upper end 281 of the left body rail 28 in the vehicle width direction is smaller than the distance between the lower end 272 of the right body rail 27 and the lower end 282 of the left body rail 28 in the vehicle width direction as seen in the vehicle front view. That is, the right body rail 27 and the left body rail 27 may be disposed in an inverted V shape as seen in the vehicle front view.

The right screen rail 31 and the left screen rail 32 may be inclined so that the distance between the upper end 311 of the right screen rail 31 and the upper end 321 of the left screen rail 32 in the vehicle width direction is larger than the distance between the lower end 312 of the right screen rail 31 and the lower end 322 of the left screen rail 32 in the vehicle width direction as seen in the vehicle front view. That is, the right screen rail 31 and the left screen rail 32 may be disposed in a V shape as seen in the vehicle front view.

In the third modification, as shown in FIG. 12A, when the windscreen 3 is located at the low position, the right slider 23 is located at the lower end 272 of the right body rail 27, and is located at the upper end 311 of the right screen rail 31. Further, when the windscreen 3 is located at the low position, the left slider 24 is located at the lower end 282 of the left body rail 28 and at the upper end 321 of the left screen rail 32.

When the windscreen 3 moves from the low position to the high position, the right slider 23 moves upward and leftward along the right body rail 27 and slides along the right screen rail 31 as shown in FIG. 12B. Further, the left slider 24 moves upward and rightward along the left body rail 28, and slides along the left screen rail 32.

As shown in FIG. 12C, when the windscreen 3 reaches the high position, the right slider 23 reaches the upper end 271 of the right body rail 27 and reaches the lower end 312 of the right screen rail 31. Further, the left slider 24 reaches the upper end 281 of the left body rail 28 and reaches the lower end 322 of the left screen rail 32.

In the straddled vehicle according to the above-described modifications, the degree of freedom in the layout of the body rails 27 and 28 is increased while obtaining a large movable range of the windscreen 3 as in the straddled vehicle according to the above embodiment.

### REFERENCE SIGNS LIST

2: Vehicle Body, 3: Windscreen, 20: Windscreen Adjuster, 23: Right Slider, 24: Left Slider, 27: Right Body Rail, 28: Left Body Rail, 31: Right Screen Rail, 32: Left Screen Rail, 51: Right Diffuser, 52: Left Diffuser

## Claims

1. A straddled vehicle (1) comprising:
a vehicle body (2);
a windscreen adjuster (20) attached to the vehicle body (2); and
a windscreen (3) attached to the vehicle body (2) via the windscreen adjuster (20),
wherein
the windscreen adjuster (20) is configured to change a height position of the windscreen (3) with regard to vehicle vertical direction,
the windscreen adjuster (20) includes
a right body rail (27) attached to the vehicle body (2),
a left body rail (28) attached to the vehicle body (2), the right body rail (27) and the left body rail (28) are disposed symmetrically,
a right screen rail (31) attached to the windscreen (3),
a left screen rail (32) attached to the windscreen (3), the right screen rail (31) and the left screen rail (32) are disposed symmetrically,
a right slider (23) disposed between the right body rail (27) and the right screen rail (31) and is slidable on the right body rail (27) and the right screen rail (31), and
a left slider (24) disposed between the left body rail (28) and the left screen rail (32) and is slidable on the left body rail (28) and the left screen rail (32), **characterized in that** the right body rail (27) and the left body rail (28) is inclined so that a distance between an upper end (271) of the right body rail (27) and an upper end (281) of the left body rail (28) in a vehicle width direction is different from a distance between a lower end (272) of the right body rail (27) and a lower end (282) of the left body rail (28) in the vehicle width direction as seen in a vehicle front view,
the right screen rail (31) and the left screen rail (32) are inclined so that a distance between an upper end (311) of the right screen rail (31) and an upper end (321) of the left screen rail (32) in the vehicle width direction is different from a distance between a lower end (312) of the right screen rail (31) and a lower end (322) of the left screen rail (32) in the vehicle width direction as seen in the vehicle front view, and the right screen rail (31) and the left screen rail (32) are inclined in a direction opposite to the right body rail (27) and the left body rail (28) as seen in the vehicle front view.

2. The straddled vehicle (1) according to claim 1, **characterized in that** the right body rail (27) and the left body rail (28) are inclined so that the distance between the upper end (271) of the right body rail (27) and the upper end (281) of the left body rail (28) in the vehicle width direction is larger than the distance between the lower end (272) of the right body rail (27) and the lower end (282) of the left body rail (28) in the vehicle width direction as seen in the vehicle front view, and
the right screen rail (31) and the left screen rail (32) are inclined so that the distance between the upper end (311) of the right screen rail (31) and the upper end (321) of the left screen rail (32) in the vehicle width direction is smaller than the distance between the lower end (312) of the right screen rail (31) and the lower end (322) of the left screen rail (32) in the vehicle width direction as seen in the vehicle front view.

3. The straddled vehicle (1) according to claim 1, **characterized in that** the right body rail (27) and the left body rail (28) are inclined so that the distance between the upper end (271) of the right body rail (27) and the upper end (281) of the left body rail (28) in the vehicle width direction is smaller than the distance between the lower end (272) of the right body rail (27) and the lower end (282) of the left body rail (28) in the vehicle width direction as seen in the vehicle front view, and
the right screen rail (31) and the left screen rail (32) are inclined so that the distance between the upper end (311) of the right screen rail (31) and the upper end (321) of the left screen rail (32) in the vehicle width direction is larger than the distance between the lower end (312) of the right screen rail (31) and the lower end (322) of the left screen rail (32) in the vehicle width direction as seen in the vehicle front view.

4. The straddled vehicle (1) according to any one of claims 1 to 3, **characterized in that** the right screen rail (31) and the left screen rail (32) are disposed on a plane parallel to a plane of the right body rail (27) and the left body rail (28).

5. The straddled vehicle (1) according to any one of claims 1 to 4, **characterized in that**
the right screen rail (31) is disposed so as to at least partly overlap the right body rail (27), and
the left screen rail (32) is disposed so as to at least partly overlap the left body rail (28).

6. The straddled vehicle (1) according to any one of claims 1 to 5, **characterized in that** the right screen rail (31) intersects the right body rail (27) in the right slider (23), and the left screen rail (32) intersects the left body rail (28) in the left slider (24).

7. The straddled vehicle (1) according to any one of claims 1 to 6, **characterized by**:
a right diffuser (51) attached to the right slider (23); and
a left diffuser (52) attached to the left slider (24).

8. The straddled vehicle (1) according to any one of claims 1 to 7, **characterized in that** the windscreen adjuster (20) is configured to change the height position of the windscreen (3) between a low position and a high position with regards to the vehicle vertical direction.

9. The straddled vehicle (1) according to claim 8, **characterized in that** when the windscreen (3) is located at the low position, the right slider (23) is located at the lower end (272) of the right body rail (27), and is located at the upper end (311) of the right screen rail (31) with regards to the vehicle vertical direction, and
when the windscreen (3) is located at the low position, the left slider (24) is located at the lower end (282) of the left body rail (28), and is located at the upper end (321) of the left screen rail (32) with regards to the vehicle vertical direction.

10. The straddled vehicle (1) according to claim 8 or 9, **characterized in that** when the windscreen (3) is located at the high position, the right slider (23) is located at the upper end (271) of the right body rail (27), and is located at the lower end (312) of the right screen rail (31) with regards to the vehicle vertical direction, and
when the windscreen (3) is located at the high position, the left slider (24) is located at the upper end (281) of the left body rail (28), and is located at the lower end (322) of the left screen rail (32) with regards to the vehicle vertical direction.

## Patentansprüche

1. Ein Spreiz-Sitz-Fahrzeug (1), das umfasst:
einen Fahrzeugkörper (2);
einen Windschildeinsteller (20), der an dem Fahrzeugkörper (2) angebracht ist; und
ein Windschild (3), das über den Windschildeinsteller (20) an dem Fahrzeugkörper (2) angebracht ist, wobei
der Windschildeinsteller (20) konfiguriert ist, um eine Höhenposition des Windschilds (3) in Bezug auf die vertikale Richtung des Fahrzeugs zu ändern,
der Windschildeinsteller (20) enthält
eine rechte Körperschiene (27), die an dem Fahrzeugkörper (2) angebracht ist,
eine linke Körperschiene (28), die an dem Fahrzeugkörper (2) angebracht ist, die rechte Körperschiene (27) und die linke Körperschiene (28) sind symmetrisch angeordnet,
eine rechte Schildschiene (31), die an dem Windschild (3) angebracht ist,
eine linke Schildschiene (32), die an dem Windschild (3) angebracht ist, die rechte Schildschiene (31) und die linke Schildschiene (32) sind symmetrisch angeordnet,
einen rechten Gleiter (23), der zwischen der rechten Körperschiene (27) und der rechten Schildschiene (31) angeordnet und auf der rechten Körperschiene (27) und der rechten Schildschiene (31) verschiebbar ist, und
einen linken Gleiter (24), der zwischen der linken Körperschiene (28) und der linken Schildschiene (32) angeordnet und auf der linken Körperschiene (28) und der linken Schildschiene (32) verschiebbar ist, **dadurch gekennzeichnet, dass** die rechte Körperschiene (27) und die linke Körperschiene (28) geneigt sind, so dass ein Abstand zwischen einem oberen Ende (271) der rechten Körperschiene (27) und einem oberen Ende (281) der linken Körperschiene (28) in einer Fahrzeugbreitenrichtung sich von einem Abstand zwischen einem unteren Ende (272) der rechten Körperschiene (27) und einem unteren Ende (282) der linken Körperschiene (28) in der Fahrzeugbreitenrichtung, gesehen in einer Fahrzeugfrontansicht, unterscheidet,
die rechte Schildschiene (31) und die linke Schildschiene (32) geneigt sind, so dass ein Abstand zwischen einem oberen Ende (311) der rechten Schildschiene (31) und einem oberen Ende (321) der linken Schildschiene (32) in der Fahrzeugbreitenrichtung sich von einem Abstand zwischen einem unteren Ende (312) der rechten Schildschiene (31) und einem unteren Ende (322) der linken Schildschiene (32) in der Fahrzeugbreitenrichtung, gesehen in der Fahrzeugfrontansicht, unterscheidet, und
die rechte Schildschiene (31) und die linke Schildschiene (32) in einer Richtung geneigt sind, die der rechten Körperschiene (27) und der linken Körperschiene (28) entgegengesetzt ist, wenn in der Fahrzeugfrontansicht gesehen.

2. Das Spreiz-Sitz-Fahrzeug (1) gemäß Anspruch 1, **dadurch gekennzeichnet, dass** die rechte Körperschiene (27) und die linke Körperschiene (28) geneigt sind, so dass der Abstand zwischen dem oberen Ende (271) der rechten Körperschiene (27) und dem oberen Ende (281) der linken Körperschiene (28) in der Fahrzeugbreitenrichtung größer ist als der Abstand zwischen dem unteren Ende (272) der rechten Körperschiene (27) und dem unteren Ende (282) der linken Körperschiene (28) in der Fahrzeugbreitenrichtung, gesehen in der Fahrzeugfrontansicht, und
die rechte Schildschiene (31) und die linke Schildschiene (32) geneigt sind, so dass der Abstand zwischen dem oberen Ende (311) der rechten Schildschiene (31) und dem oberen Ende (321) der linken Schildschiene (32) in der Fahrzeugbreitenrichtung kleiner ist als der Abstand zwischen dem unteren Ende (312) der rechten Schildschiene (31) und dem unteren Ende (322) der linken Schildschiene (32) in der Fahrzeugbreitenrichtung, gesehen in der Fahrzeugfrontansicht.

3. Das Spreiz-Sitz-Fahrzeug (1) gemäß Anspruch 1, **dadurch gekennzeichnet, dass** die rechte Körperschiene (27) und die linke Körperschiene (28) geneigt sind, so dass der Abstand zwischen dem oberen Ende (271) der rechten Körperschiene (27) und dem oberen Ende (281) der linken Körperschiene (28) in der Fahrzeugbreitenrichtung kleiner ist als der Abstand zwischen dem unteren Ende (272) der rechten Körperschiene (27) und dem unteren Ende (282) der linken Körperschiene (28) in der Fahrzeugbreitenrichtung, gesehen in der Fahrzeugfrontansicht, und
die rechte Schildschiene (31) und die linke Schildschiene (32) geneigt sind, so dass der Abstand zwischen dem oberen Ende (311) der rechten Schildschiene (31) und dem oberen Ende (321) der linken Schildschiene (32) in der Fahrzeugbreitenrichtung größer ist als der Abstand zwischen dem unteren Ende (312) der rechten Schildschiene (31) und dem unteren Ende (322) der linken Schildschiene (32) in der Fahrzeugbreitenrichtung, gesehen in der Fahrzeugfrontansicht.

4. Das Spreiz-Sitz-Fahrzeug (1) gemäß irgendeinem der Ansprüche 1 bis 3, **dadurch gekennzeichnet, dass** die rechte Schildschiene (31) und die linke Schildschiene (32) in einer Ebene parallel zu einer Ebene der rechten Körperschiene (27) und der linken Körperschiene (28) angeordnet sind.

5. Das Spreiz-Sitz-Fahrzeug (1) gemäß irgendeinem der Ansprüche 1 bis 4, **dadurch gekennzeichnet, dass** die rechte Schildschiene (31) angeordnet ist, so dass sie die rechte Körperschiene (27) zumindest teilweise überlappt, und
die linke Schildschiene (32) angeordnet ist, so dass sie die linke Körperschiene (28) zumindest teilweise überlappt.

6. Das Spreiz-Sitz-Fahrzeug (1) gemäß irgendeinem der Ansprüche 1 bis 5, **dadurch gekennzeichnet, dass** die rechte Schildschiene (31) die rechte Körperschiene (27) im rechten Gleiter (23) kreuzt, und
die linke Schildschiene (32) die linke Körperschiene (28) im linken Gleiter (24) kreuzt.

7. Das Spreiz-Sitz-Fahrzeug (1) gemäß irgendeinem der Ansprüche 1 bis 6, **gekennzeichnet durch:**
einen rechten Diffusor (51), der an dem rechten Gleiter (23) angebracht ist; und
einen linken Diffusor (52), der an dem linken Gleiter (24) angebracht ist.

8. Das Spreiz-Sitz-Fahrzeug (1) gemäß irgendeinem der Ansprüche 1 bis 7, **dadurch gekennzeichnet, dass** der Windschildeinsteller (20) konfiguriert ist, so dass er die Höhenposition des Windschilds (3) zwischen einer niedrigen Position und einer hohen Position in Bezug auf die vertikale Richtung des Fahrzeugs ändert.

9. Das Spreiz-Sitz-Fahrzeug (1) gemäß Anspruch 8, **dadurch gekennzeichnet, dass,** wenn sich das Windschild (3) in der unteren Position befindet, sich der rechte Gleiter (23) am unteren Ende (272) der rechten Körperschiene (27) und am oberen Ende (311) der rechten Schildschiene (31) in Bezug auf die vertikale Richtung des Fahrzeugs befindet, und
wenn sich das Windschild (3) in der unteren Position befindet, sich der linke Gleiter (24) am unteren Ende (282) der linken Körperschiene (28) und am oberen Ende (321) der linken Schildschiene (32) in Bezug auf die vertikale Richtung des Fahrzeugs befindet.

10. Das Spreiz-Sitz-Fahrzeug (1) gemäß Anspruch 8 oder 9, **dadurch gekennzeichnet, dass,**
wenn sich das Windschild (3) in der hohen Position befindet, sich der rechte Gleiter (23) am oberen Ende (271) der rechten Körperschiene (27) und am unteren Ende (312) der rechten Schildschiene (31) in Bezug auf die vertikale Richtung des Fahrzeugs befindet, und
wenn sich das Windschild (3) in der hohen Position befindet, sich der linke Gleiter (24) am oberen Ende (281) der linken Körperschiene (28) und am unteren Ende (322) der linken Schildschiene (32) in Bezug auf die vertikale Fahrzeugrichtung befindet.

## Revendications

1. Véhicule à califourchon (1) comprenant :
une carrosserie de véhicule (2) ;
un dispositif de réglage de pare-brise (20) fixé à la carrosserie de véhicule (2) ; et
un pare-brise (3) fixé à la carrosserie de véhicule (2) par l'intermédiaire du dispositif de réglage de pare-brise (20), dans lequel
le dispositif de réglage de pare-brise (20) est configuré pour modifier la position en hauteur du pare-brise (3) par rapport au sens vertical du véhicule,
le dispositif de réglage de pare-brise (20) inclut
un rail de carrosserie droit (27) fixé à la carrosserie de véhicule (2),
un rail de carrosserie gauche (28) fixé à la carrosserie de véhicule (2), le rail de carrosserie droit (27) et le rail de carrosserie gauche (28) étant disposés symétriquement,
un rail de pare-brise droit (31) fixé au pare-brise (3),
un rail de pare-brise gauche (32) fixé au pare-brise (3), le rail de pare-brise droit (31) et le rail de pare-brise gauche (32) étant disposés symétriquement,
un coulisseau droit (23) disposé entre le rail de carrosserie droit (27) et le rail de pare-brise droit (31) et pouvant coulisser sur le rail de carrosserie droit (27) et le rail de pare-brise droit (31), et
un coulisseau gauche (24) disposé entre le rail de carrosserie gauche (28) et le rail de pare-brise gauche (32) et pouvant coulisser sur le rail de carrosserie gauche (28) et le rail de pare-brise gauche (32), **caractérisé en ce que** le rail de carrosserie droit (27) et le rail de carrosserie gauche (28) sont inclinés de telle sorte qu'une distance entre une extrémité supérieure (271) du rail de carrosserie droit (27) et une extrémité supérieure (281) du rail de carrosserie gauche (28) dans le sens de la largeur du véhicule est différente d'une distance entre une extrémité inférieure (272) du rail de carrosserie droit (27) et une extrémité inférieure (282) du rail de carrosserie gauche (28) dans le sens de la largeur du véhicule, tel que vu dans la vue de face du véhicule,
le rail de pare-brise droit (31) et le rail de pare-brise gauche (32) sont inclinés de telle sorte qu'une distance entre une extrémité supérieure (311) du rail de pare-brise droit (31) et une extrémité supérieure (321) du rail de pare-brise gauche (32) dans le sens de la largeur du véhicule est différente d'un sens entre une extrémité inférieure (312) du rail de pare-brise droit (31) et une extrémité inférieure (322) du rail de pare-brise gauche (32) dans le sens de la largeur du véhicule tel que vu dans la vue de face du véhicule, et
le rail de pare-brise droit (31) et le rail de pare-brise gauche (32) sont inclinés dans un sens opposé au rail de carrosserie droit (27) et au rail de carrosserie gauche (28) tels que vus dans la vue de face du véhicule.

2. Véhicule à califourchon (1) selon la revendication 1, **caractérisé en ce que** le rail de carrosserie droit (27) et le rail de carrosserie gauche (28) sont inclinés de telle sorte que la distance entre l'extrémité supérieure (271) du rail de carrosserie droit (27) et l'extrémité supérieure (281) du rail de carrosserie gauche (28) dans le sens de la largeur du véhicule est plus grande que la distance entre l'extrémité inférieure (272) du rail de carrosserie droit (27) et l'extrémité inférieure (282) du rail de carrosserie gauche (28) dans le sens de la largeur du véhicule, tel que vu dans la vue de face du véhicule, et
le rail de pare-brise droit (31) et le rail de pare-brise gauche (32) sont inclinés de telle sorte que la distance entre l'extrémité supérieure (311) du rail de pare-brise droit (31) et l'extrémité supérieure (321) du rail de pare-brise gauche (32) dans le sens de la largeur du véhicule est inférieure à la distance entre l'extrémité inférieure (312) du rail de pare-brise droit (31) et l'extrémité inférieure (322) du rail de pare-brise gauche (32) dans le sens de la largeur du véhicule, tel que vu dans la vue de face du véhicule.

3. Véhicule à califourchon (1) selon la revendication 1, **caractérisé en ce que** le rail de carrosserie droit (27) et le rail de carrosserie gauche (28) sont inclinés de telle sorte que la distance entre l'extrémité supérieure (271) du rail de carrosserie droit (27) et l'extrémité supérieure (281) du rail de carrosserie gauche (28) dans le sens de la largeur du véhicule est inférieure à la distance entre l'extrémité inférieure (272) du rail de carrosserie droit (27) et l'extrémité inférieure (282) du rail de carrosserie gauche (28) dans le sens de la largeur du véhicule tel que vu dans la vue de face du véhicule, et
le rail de pare-brise droit (31) et le rail de pare-brise gauche (32) sont inclinés de telle sorte que la distance entre l'extrémité supérieure (311) du rail de pare-brise droit (31) et l'extrémité supérieure (321) du rail de pare-brise gauche (32) dans le sens de la largeur du véhicule est plus grande que la distance entre l'extrémité inférieure (312) du rail de pare-brise droit (31) et l'extrémité inférieure (322) du rail de pare-brise gauche (32) dans le sens de la largeur du véhicule, tel que vu dans la vue de face du véhicule.

4. Véhicule à califourchon (1) selon l'une quelconque des revendications 1 à 3, **caractérisé en ce que** le rail de pare-brise droit (31) et le rail de pare-brise gauche (32) sont disposés sur un plan parallèle à un plan du rail de carrosserie droit (27) et du rail de carrosserie gauche (28).

5. Véhicule à califourchon (1) selon l'une quelconque des revendications 1 à 4, **caractérisé en ce que** le rail de pare-brise droit (31) est disposé de manière à chevaucher au moins partiellement le rail de carrosserie droit (27), et
le rail de pare-brise gauche (32) est disposé de manière à chevaucher au moins partiellement le rail de carrosserie gauche (28) .

6. Véhicule à califourchon (1) selon l'une quelconque des revendications 1 à 5, **caractérisé en ce que** le rail de pare-brise droit (31) croise le rail de carrosserie droit (27) dans le coulisseau droit (23), et
le rail de pare-brise gauche (32) croise le rail de carrosserie gauche (28) dans le coulisseau gauche (24).

7. Véhicule à califourchon (1) selon l'une quelconque des revendications 1 à 6, **caractérisé par** :
un diffuseur droit (51) fixé au coulisseau droit (23) ; et
un diffuseur gauche (52) fixé au coulisseau gauche (24).

8. Véhicule à califourchon (1) selon l'une quelconque des revendications 1 à 7, **caractérisé en ce que** le dispositif de réglage de pare-brise (20) est configuré pour modifier la position en hauteur du pare-brise (3) entre une position basse et une position haute par rapport au sens vertical du véhicule.

9. Véhicule à califourchon (1) selon la revendication 8, **caractérisé en ce que,** lorsque le pare-brise (3) est en position basse, le coulisseau droit (23) est situé à l'extrémité inférieure (272) du rail de carrosserie droit (27) et à l'extrémité supérieure (311) du rail de pare-brise droit (31) par rapport au sens vertical du véhicule, et que
lorsque le pare-brise (3) est en position basse, le coulisseau gauche (24) est situé à l'extrémité inférieure (282) du rail de carrosserie gauche (28) et à l'extrémité supérieure (321) du rail de pare-brise gauche (32) par rapport au sens vertical du véhicule.

10. Véhicule à califourchon (1) selon la revendication 8 ou 9, **caractérisé en ce que,** lorsque le pare-brise (3) est en position haute, le coulisseau droit (23) est situé à l'extrémité supérieure (271) du rail de carrosserie droit (27) et à l'extrémité inférieure (312) du rail de pare-brise droit (31) par rapport au sens vertical du véhicule, et **en ce que**
lorsque le pare-brise (3) est en position haute, le coulisseau gauche (24) est situé à l'extrémité supérieure (281) du rail de carrosserie gauche (28) et à l'extrémité inférieure (322) du rail de pare-brise gauche (32) par rapport au sens vertical du véhicule.
